# EUROPEAN PATENT APPLICATION

(11) **EP 2 490 410 A1**
(43) Date of publication of application: **22.08.2012**
(21) Application number: 10823206.7
(22) Date of filing: 14.10.2010
(51) Int. Cl.: H04M 1/00, H04W 48/18, H04W 88/02, H04W 88/06

(54) **PORTABLE TERMINAL**

(30) Priority: 14.10.2009 JP 2009237181
(71) Applicant: Panasonic Corporation, Kadoma-shi Osaka 571-8501 (JP)
(72) Inventor: OHMOTO, Akihiro, Osaka 540-6207 (JP)
(74) Representative: Grünecker, Kinkeldey, Stockmair & Schwanhäusser
(86) International application number: PCT/JP2010/006119
(87) International publication number: WO 2011/045938

(57) **Abstract**

When it is appropriate to switch communication method, a portable terminal enables the notifying of a user of conditions. On the basis of visited network identification information acquired from a mobile communication system, the control section of the portable terminal displays a message on a display for alerting the user when there has been a switch in communication method from 3G to GSM. At this time, the change in visited country wherein the portable terminal is currently located is determined, and after displaying the message, the display of the message is suppressed until the visited country changes. That is, by only displaying the message when network switching occurs when changing the visited country and the visited network changes to a GSM network, alerts are prevented from being displayed more than necessary.

## Description

### TECHNICAL FIELD

The invention relates to a portable terminal having a wireless communication function adapted for a mobile communication system.

### BACKGROUND ART

AS a portable terminal adapted for a mobile communication system, such as cellular phone, a portable phone apparatus that can be used in other countries and regions has been developed. Such portable terminal can perform communication in foreign countries, other than a country and a region in which the terminal is located, by using an international roaming service that is provided by communication providers.

For example, Patent Document 1 discloses a communication apparatus such as portable phone that can be used abroad and notify a user of operation confirmation. The communication apparatus recognizes region information, which indicates a region of a communication network to which it is intended to communication-connect. When the region information is not predetermined region information, the apparatus notifies the corresponding fact.

### [Related Technical Documents]

### [Patent Documents]

[Patent Document 1] JP-A-2008-244513

### SUMMARY OF THE INVENTION

### PROBLEMS TO BE SOLVED

The communication methods may be different, depending on countries and regions in which wireless communication services of the mobile communication system are provided, or communication providers that provide the wireless communication services. The portable terminal that can be used abroad is adapted to a plurality of communication methods such as 3G and GSM methods. When a user uses abroad a portable terminal based in a region of the 3G method, if a communication method in the foreign region is the GSM method, about double current is consumed, compared to the 3G method. As a result, the battery life (useable time) is reduced by about half, compared to a case where the portable terminal is used in the base region. Therefore, the portable terminal performs a notification such as alarm display, which indicates that the GSM method is being used, to a user for alert. The alert can be also made by using the function of the communication apparatus disclosed in Patent Document 1.

However, the 3G and GSM methods may coexist depending on countries and regions (hereinafter, referred to as 3G/GSM coexisting area). In the 3G/GSM coexisting area, when displaying the alert, as described above, the alert is frequently displayed whenever the communication method is changed. The frequent alerts are troublesome to the user and remarkably deteriorate the usability.

The invention has been made to solve the above problem. An object of the invention is to provide a portable terminal that can notify a user of switching of a communication method at appropriate timing and state and can effectively alert the user.

### MEANS FOR SOLVING THE PROBLEMS

The invention provides a portable terminal that includes a wireless communication section that performs wireless communication adapted for a mobile communication system; a notification section that performs notification to a user, and a notification control section that enables the notification section to perform notification when a communication method of the wireless communication is switched from a first communication method to a second communication method, wherein the notification control section performs the notification once when the communication method is switched from the first communication method to the second communication method while the portable terminal is moved, and then suppresses the notification until a predetermined condition is satisfied.
By the above configuration, when notifying a user of the switching of the communication method, the notification is suppressed from being made more than necessary. Also, it is possible to notify the user of the switching of the communication method at appropriate timing and state.

Also, according to the portable terminal of the invention, the notification control section determines a change in a country or region in which the portable terminal is located, based on visited network identification information acquired from the mobile communication system and performs the notification once, and then suppresses the notification until the country or region in which the portable terminal is located is changed.
By the above configuration, after the notification is made once, the notification is suppressed until the country or region in which the portable terminal is located is changed. Thereby, the notification is suppressed from being made beyond necessity. Also, it is possible to effectively alert the user at appropriate timing and state.

Also, according to the portable terminal of the invention, the notification control section determines a change in a network of the mobile communication system in which the terminal is located, based on visited network identification information acquired from the mobile communication system and performs the notification once, and then suppresses the notification until the network in which the portable terminal is located is changed.
By the above configuration, after the notification is made once, the notification is suppressed until the network in which the portable terminal is located is changed. Thereby, the notification is suppressed from being made more than necessary. Also, it is possible to effectively alert the user at appropriate timing and state.

Also, according to the portable terminal of the invention, the notification control section determines predetermined time lapse and performs the notification once, and then suppresses the notification until predetermined time elapses.
By the above configuration, after the notification is made once, the notification is suppressed until predetermined time elapses. Thereby, the notification is suppressed from being made more than necessary. Also, it is possible to effectively alert the user at appropriate timing and state.

Also, according to the portable terminal of the invention, the notification control section determines the number of times of network switching of the mobile communication system in which the portable terminal is located, based on visited network identification information acquired from the mobile communication system and performs the notification once, and then suppresses the notification until the number of times of network switching becomes a predetermined number of times.
By the above configuration, after the notification is made once, the notification is suppressed until the number of times of the network switching becomes the predetermined number of times. Thereby, the notification s suppressed from being made beyond necessity. Also, it is possible to effectively alert the user at appropriate timing and state.

Also, according to the portable terminal of the invention, the notification section includes a display section that displays a message of notifying the user of switching of the communication method.
By the above configuration, the display section displays a message that notifies the user of the switching of the communication method. Thereby, it is possible to appropriately alert the user.

### EFFECTS OF THE INVENTION

According to the invention, it is possible to provide a portable terminal that can notify a user of switching of the communication method at appropriate timing and state and can effectively alert the user.

### BRIEF DESCRIPTION OF THE DRAWINGS

FIG. 1 is a block diagram showing a configuration of a portable terminal according to an illustrative embodiment of the invention.
FIG. 2 shows an example of network identification information that is used in an illustrative embodiment.
FIG. 3 is a flowchart showing a sequence of a message display operation in a first illustrative embodiment.
FIG. 4 shows examples of an alert message that is displayed on a display, in which FIG. 4(a) shows a first example and FIG. 4(b) shows a second example.
FIG. 5 is a flowchart showing a sequence of a message display operation in a second illustrative embodiment.
FIG. 6 is a flowchart showing a sequence of a message display operation in a third illustrative embodiment, in which FIG. 6(A) shows a sequence of main processing of the message display operation and FIG. 6(B) shows a sequence of predetermined time timer processing.
FIG. 7 is a flowchart showing a sequence of a message display operation in a fourth illustrative embodiment, in which FIG. 7(A) shows main processing of the message display operation and FIG. 7(B) shows a sequence of network switching count processing.

### DESCRIPTION OF PREFERRED ILLUSTRATIVE EMBODIMENTS

In below illustrative embodiments, as an example of a portable terminal, it will be described a configuration example of a communication apparatus that is applied to a portable phone apparatus, which has a wireless communication section performing wireless communication by using a mobile communication system and can perform voice call, data communication and the like. Also, the configuration and operation thereof will be specifically described.

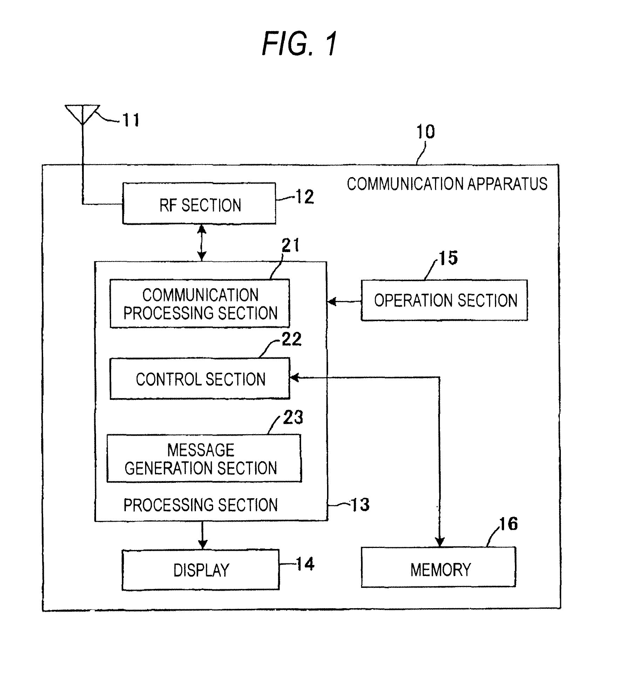

FIG. 1 is a block diagram showing a configuration of a portable terminal according to an illustrative embodiment of the invention. A communication apparatus 10 of the illustrative embodiment, which is a portable terminal, has an antenna 11, a RF section 12, a processing section 13, a display 14, an operation section 15 and a memory 16.

The RF section 12 is a wireless communication section that performs wireless communication in correspondence to a plurality of communication methods such as 3G and GSM methods, and has a wireless circuit, an amplifier and the like. The RF section 12 converts a transmission signal to a wireless signal, transmits the wireless signal through the antenna 11, converts a wireless signal received by the antenna 11 into a baseband signal and thus acquires a reception signal. The processing section 13 is configured by an MPU (Micro Processing Unit), a DSP (Digital Signal Processor) and the like, has a communication processing section 21, a control section 22 and a message generation section 23 and performs a variety of signal processing and control processing. The communication processing section 21 performs various communication processing such as generation and encoding of data, decoding and recovery of reception data and the like in correspondence to the plurality of communication methods such as 3G and GSM methods. The control section 22 performs various control processing such as operation control about functions of the respective sections. The message generation section 23 generates display information of a message screen that is displayed on the display 14, based on the control of the control section 22. Here, the 3G method is referred to as a first communication method and the GSM method is referred to as a second communication method, and an example is described in which the two communication methods are switched, so that the wireless communication can be performed in other countries, regions and networks. In the above configuration, the antenna 11, the RF section 12 and the communication processing section 21 implement functions of the wireless communication section.

The display 14 is a display section consisting of a liquid crystal display apparatus and the like and functions as a notification section that performs notification to a user. The display 114 displays not only the other party of communication, communication contents, acquired contents, operating states and the like but also a message screen prepared in the message generation section 23. The operation section 15 has at least one of various operation input sections such as keys consisting of pressing buttons, a touch panel and the like, and receives an operation input of a user. The memory 16 is configured by a storage device such as non-volatile memory and the like, and stores operating programs of the apparatus, setting information, contents and the like. In the memory 16, network identification information for identifying country, region and network of a mobile communication system in which the corresponding apparatus is currently located is stored by a table and the like.

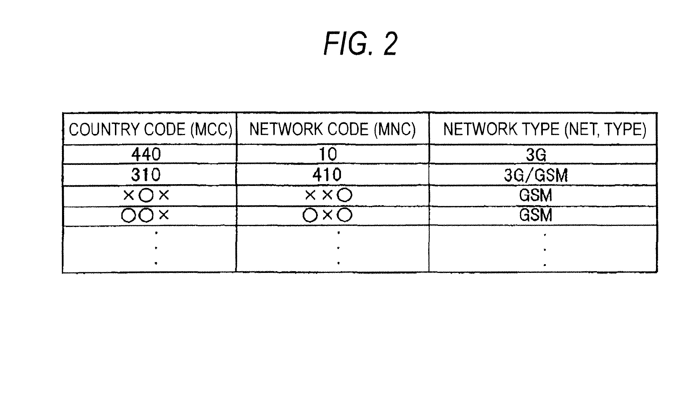

FIG. 2 shows an example of the network identification information that is used in this illustrative embodiment. The network identification information is information for identifying a visited network in which the wireless communication is currently performed and a network type thereof by comparison with MM information that is visited network identification information received from a base station of the mobile communication system. The network identification information has a country code (MCC), a network code (MNC) and a network type (Net.Type), and the communication methods of the wireless communication services being provided in the respective countries, regions and networks (communication providers and the like) are correspondingly defined as the network types. In this illustrative embodiment, the network type includes '3G' indicating an area of solely 3G (3G area), 'GSM' indicating an area of solely GSM (GSM area) and '3G/GSM' indicating a coexisting area of 3G and GSM (3G/GSM coexisting area). The country code is a code for identifying each country and region in which services of the mobile communication system are provided. The network code is a code for identifying a communication network of each communication provider that provides the wireless communication services. The MM information is information of international time that is defined with 3GPP (3rd Generation Partnership Project), which is a standard of the mobile communication system, and that a portable phone receives from a server on network. For example, GMT+9 indicates time of Japan. Also, the MM information is periodically acquired from an external server. When the MM information is once acquired and stored in the storage section, the MM information of the storage section remains stored even when a power supply becomes off and starts again. Also, when a location of the portable phone is changed, information of different MM information is acquired, so that the information of the storage section is updated.

The control section 22 of the communication apparatus 10 refers to the MM information information, which is visited network identification information before MM information received from the base station is acquired and stored in the memory 16, and the network identification information, thereby identifying the change in the network and network type of the mobile communication system that is currently used. By the MM information, it is possible to identify the country or region of the mobile communication system in which the corresponding apparatus is located, the network of the communication provider, and the like. By the network identification information corresponding to the MM information, it is possible to identify the network type of the network in which the corresponding apparatus is located. Also, the control section 22 replies a response to the MM information received from the base station, thereby registering a location of the corresponding apparatus in the base station.

Then, when it is determined that the visited country, region, network and the like are switched and the communication method is switched, for example from 3G network to GSM network, based on the identification result of the network type, the control section 22 issues an instruction to display an alert message, which notifies the user of the switching of the communication method. Based on the instruction to display the message, display information of a message screen is generated and output from the message generation section 23, so that a message screen is displayed on the display 14. Like this, the control section 22 has a function of the notification control section.

In the below, a message display operation, which is a characteristic operation of this illustrative embodiment and is performed when the communication method is switched, is described with reference to examples.

### (First Illustrative Embodiment)

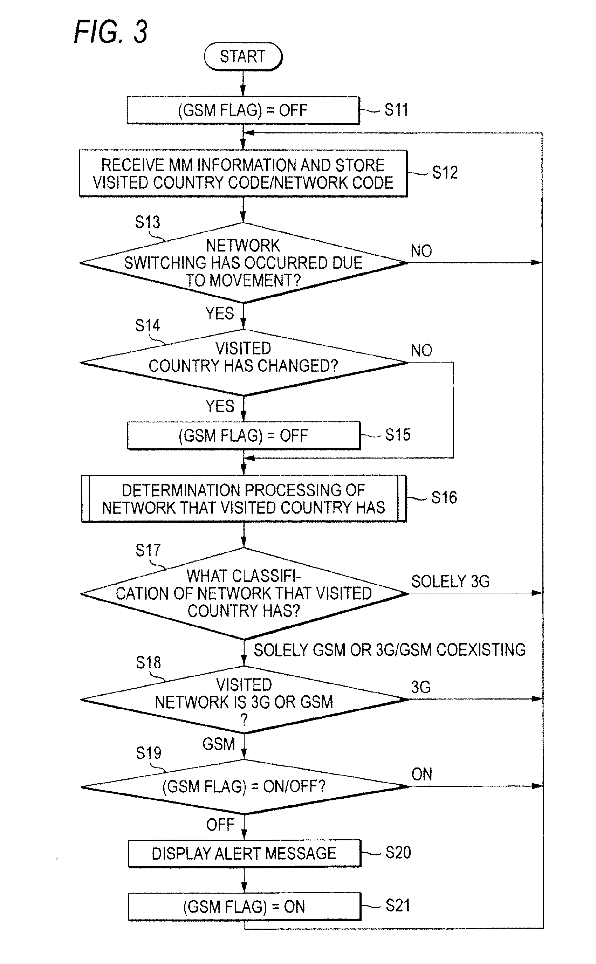

FIG. 3 is a flowchart showing a sequence of the message display operation in a first illustrative embodiment. In the first illustrative embodiment, when the visited network is changed, it is determined whether or not to display a message, depending on the country (or region). Here, when a predetermined condition is satisfied, i.e., only when the network switching resulting from a change in the country (region) occurs and the visited network changes to the GSM network, an alert message is displayed. Thereby, alerts are suppressed from being displayed more than necessary and the switching of communication method is notified to the user at appropriate timing.

The control section 22 first makes a GSM flag OFF (step S11). The GSM flag is a flag for setting whether or not to display a message when the communication method of the network is switched to the GSM network. When the GSM flag is OFF, a message is displayed and when the GSM flag is ON, a message is not displayed.

Then, the control section receives the MM information, which is the visited network identification information, from a base station of a visited network and stores visited country code and network code in the memory 16 (step S12). Then, the control section 22 compares the stored network code with the network code of the visited network identification information stored previously and thus determines whether a network switching has occurred due to movement (step S13). When the network switching has not occurred, the control section returns to step S12 and repeats the same processing. When it is determined in step S13 that the network switching has occurred, the control section subsequently compares the stored country code with the country code of the visited network identification information stored previously and thus determines whether the visited country has changed (step S14). Like this, regarding a method of specifying the visited country, the country code in the MM information received from the base station is preferably used. Here, when the visited country has changed, the control section makes the GSM flag OFF (step S15) and proceeds to determination processing of the network that the visited country has (step S16). On the other hand, when it is not determined in step S14 that the visited country has changed, the GSM flag remains unchanged and the control section proceeds to determination processing (step S16) of the network that the visited country has.

In the determination processing of the network that the visited country has, the control section 22 refers to the network type of the network identification information table stored in the memory 16, thereby determining whether the network type is the area of solely 3G (3G area), the area of solely GSM (GSM area) or the coexisting area of 3G and GSM (3G/GSM coexisting area). First, the control section determines a type of the network that the visited country has (step S17). Here, the control section determines whether a type of the network is solely 3G, solely GSM or 3G/GSM coexisting. When a type of the network that the visited country has is solely 3G, the control section returns to step S12 and repeats the same processing. On the other hand, when a type of the network that the visited country has is solely GSM or 3G/GSM coexisting, the control section subsequently determines whether the visited network is 3G or GSM (step S18). When the visited network is 3G, the control section returns to step S12 and repeats the same processing. On the other hand, when the visited network is GSM, the control section further determines whether the GSM flag is ON or OFF (step S19). When the GSM flag is ON, the control section returns to step S12 and repeats the same processing. On the other hand, when the GSM flag is OFF, the control section displays an alert message on the display 14 (step S20). After displaying the message, the control section makes the GSM flag ON (step S21), returns to step S12 and repeats the same processing.

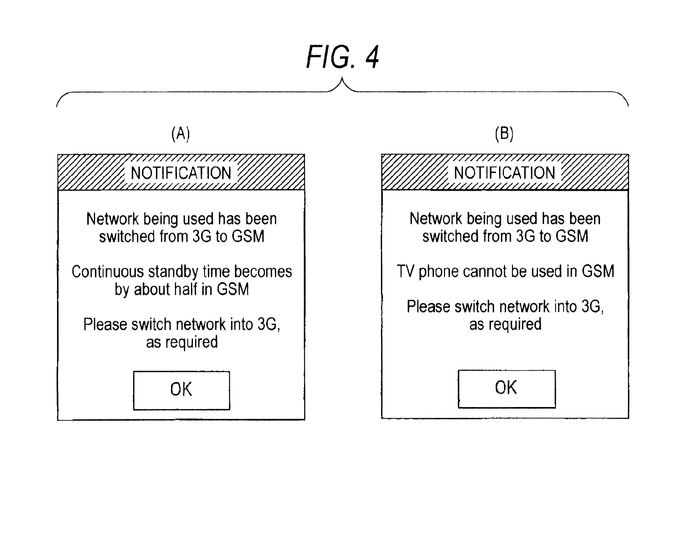

FIG. 4 shows examples of an alert message that is displayed on the display 14. A first example of FIG. 4(A) notifies that the network is switched from 3G to GSM and the continuous standby time (battery life) becomes by about half. A second example of FIG. 4(B) notifies that the network is switched from 3G to GSM and a TV phone cannot be used in the GSM.

By the above processing, when the visited network is changed to the GSM network, the alert message is displayed. After that, the GSM flag is ON, and the state of the GSM flag=ON maintains and the alert message is not displayed until the network switching crossing the country occurs. When the network switching crossing the country occurs, the GSM flag becomes OFF and an alert message is displayed when the visited network is changed to the GSM network next time.

Like this, according to the first illustrative embodiment, in the GSM area of solely GSM and the 3G/GSM coexisting area, the alert message is displayed only when the visited network first changes to the GSM network. Therefore, it is possible to suppress the alerts from being displayed beyond necessity and to notify the user of the switching of the communication method at appropriate timing. Thereby, it is possible to improve the usability and to effectively alert the user.

### (Second Illustrative Embodiment)

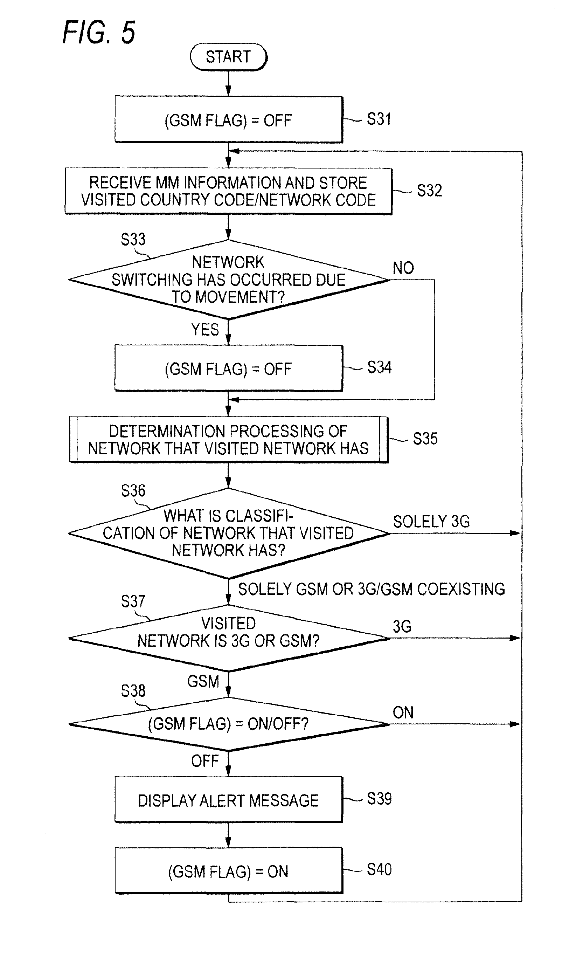

FIG. 5 is a flowchart showing a sequence of a message display operation in a second illustrative embodiment. In the second illustrative embodiment, it is determined whether or not to display a message by a network code when the visited network changes. Here, when a predetermined condition is satisfied, i.e., only when the network switching resulting in a change in the network code occurs and the visited network changes to the GSM network, an alert message is displayed. Thereby, alerts are suppressed from being displayed more than necessary and the switching of communication method is notified to the user at appropriate timing.

The control section 22 first makes a GSM flag OFF (step S31). Then, the control section receives the MM information, which is the visited network identification information, from a base station of a visited network and stores visited country code and network code in the memory 16 (step S32). Then, the control section 22 compares the stored network code with the network code of the visited network identification information stored previously and thus determines whether a network switching has occurred due to movement (step S33). Like this, regarding a method of specifying the visited network, the network code in the MM information received from the base station is preferably used. When the network switching has occurred, the control section makes the GSM flag OFF (step S34) and proceeds to determination processing of the network that the visited network has (step S35). On the other hand, when it is not determined in step S33 that the network switching has occurred, the GSM flag remains unchanged and the control section proceeds to determination processing (step S35) of the network that the visited network has.

In the determination processing of the network that the visited network has, the control section 22 refers to the network type of the network identification information table stored in the memory 16, thereby determining whether the network type is the 3G area, the GSM area or the 3G/GSM coexisting area. First, the control section determines a type of the network that the visited network has (step S36). Here, the control section determines whether a type of the network is solely 3G, solely GSM or 3G/GSM coexisting. When a type of the network that the visited network has is solely 3G, the control section returns to step S32 and repeats the same processing. On the other hand, when a type of the network that the visited network has is solely GSM or 3G/GSM coexisting, the control section subsequently determines whether the visited network is 3G or GSM (step S37). When the visited network is 3G, the control section returns to step S32 and repeats the same processing. On the other hand, when the visited network is GSM, the control section further determines whether the GSM flag is ON or OFF (step S38). When the GSM flag is ON, the control section returns to step S32 and repeats the same processing. On the other hand, when the GSM flag is OFF, the control section displays an alert message on the display 14 (step S39). After displaying the message, the control section makes the GSM flag ON (step S40), returns to step S32 and repeats the same processing.

By the above processing, when the visited network changes to the GSM network, the alert message is displayed. After that, the GSM flag is ON, and the state of the GSM flag=ON maintains and the alert message is not displayed until the network switching resulting in the change in the network code occurs. When the network switching resulting in the change in the network code occurs, the GSM flag becomes OFF and an alert message is displayed when the visited network changes to the GSM network next time.

Like this, according to the second illustrative embodiment, in the GSM area of solely GSM and the 3G/GSM coexisting area, the alert message is displayed only when the visited network first changes to the GSM network as long as the apparatus is in the same network code. Therefore, it is possible to suppress the alert display. Hence, it is possible to suppress the alerts from being displayed more than necessary and to notify the user of the switching of the communication method at appropriate timing. Thereby, it is possible to improve the usability and to effectively alert the user.

### (Third Illustrative Embodiment)

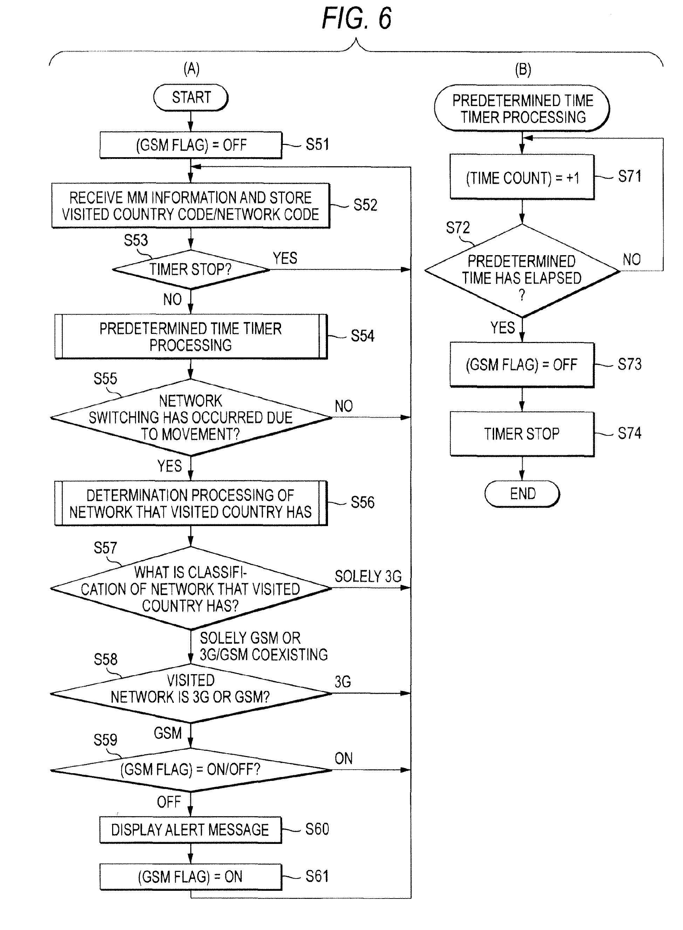

FIG. 6 is a flowchart showing a sequence of a message display operation in a third illustrative embodiment, in which FIG. 6(A) shows a sequence of main processing of the message display operation and FIG. 6(B) shows a sequence of predetermined time timer processing. The third illustrative embodiment is a modified embodiment of the first and second illustrative embodiments and determines whether or not to display a message by predetermined time lapse. In the meantime, FIG. 6 shows an example that is applied to the case where the determination is made depending on the countries, which is described in the first illustrative embodiment. However, the example can be also applied to the case where the determination is made depending on the networks, which is described in the second illustrative embodiment.

In the third illustrative embodiment, the alert display is suppressed until predetermined time elapses, for example 24 hours elapses. The control section 22 first makes the GSM flag OFF (step S51). Then, the control section receives the MM information, which is the visited network identification information, from a base station of a visited network and stores visited country code and network code in the memory 16 (step S52). Then, the control section 22 determines whether a timer for measuring predetermined time stops or not (step S53). When it is not determined that the timer stops, the control section performs predetermined time timer processing that will be described later (step S54). The predetermined time timer processing is performed asynchronously with the main processing. On the other hand, when it is determined that the timer stops, the control section skips over the predetermined time timer processing of step S54 and proceeds to next processing.

In the predetermined time timer processing, the control section increments a time count, which counts predetermined time lapse, by +1 (step S71) and thus determines whether predetermined time has elapsed (step S72). Here, when it is not determined that predetermined time such as 24 hours has elapsed, the control section returns to step S71 and repeats the time count. On the other hand, when it is determined that the predetermined time has elapsed, the control section makes the GSM flag OFF (step S73) and stops a timer that measures predetermined time (step S74). Then, the control section ends the predetermined time timer processing and returns to the main processing.

After the predetermined time timer processing of step S54, the control section 22 compares the stored country code and network code with the country code and network code of the visited network identification information stored previously and thus determines whether a network switching has occurred due to movement (step S55). When it is not determined that the network switching has occurred, the control section returns to step S52 and repeats the same processing. On the other hand, when it is determined that the network switching has occurred, the control section proceeds to determination processing of the network that the visited country has (step S56).

In the determination processing of the network that the visited network has, the control section 22 refers to the network type of the network identification information table stored in the memory 16, thereby determining whether the network type is the 3G area, the GSM area or the 3G/GSM coexisting area. First, the control section determines a type of the network that the visited country has (step S57). Here, the control section determines whether a type of the network is solely 3G, solely GSM or 3G/GSM coexisting. When a type of the network that the visited country has is solely 3G, the control section returns to step S52 and repeats the same processing. On the other hand, when a type of the network that the visited network has is solely GSM or 3G/GSM coexisting, the control section subsequently determines whether the visited network is 3G or GSM (step S58). When the visited network is 3G, the control section returns to step S52 and repeats the same processing. On the other hand, when the visited network is GSM, the control section further determines whether the GSM flag is ON or OFF (step S59). When the GSM flag is ON, the control section returns to step S52 and repeats the same processing. On the other hand, when the GSM flag is OFF, the control section displays an alert message on the display 14 (step S60). After displaying the message, the control section makes the GSM flag ON (step S61), returns to step S52 and repeats the same processing.

By the above processing, when the visited network changes to the GSM network, the alert message is displayed. After that, the state of the GSM flag=ON maintains and the alert message is not displayed until the predetermined time elapses. When the predetermined time elapses, the GSM flag becomes OFF and an alert message is displayed when the visited network changes to the GSM network next time.

Like this, according to the third illustrative embodiment, in the GSM area of solely GSM and the 3G/GSM coexisting area, the alert message is displayed when the visited network first changes to the GSM network. After that, the alert display is suppressed until the predetermined time elapses. Thus, it is possible to suppress the alert display. For example, the alert display is suppressed until 24 hours elapses. Thereby, the notification can be made to the user one time per one day and at appropriate timing.

### (Fourth Illustrative Embodiment)

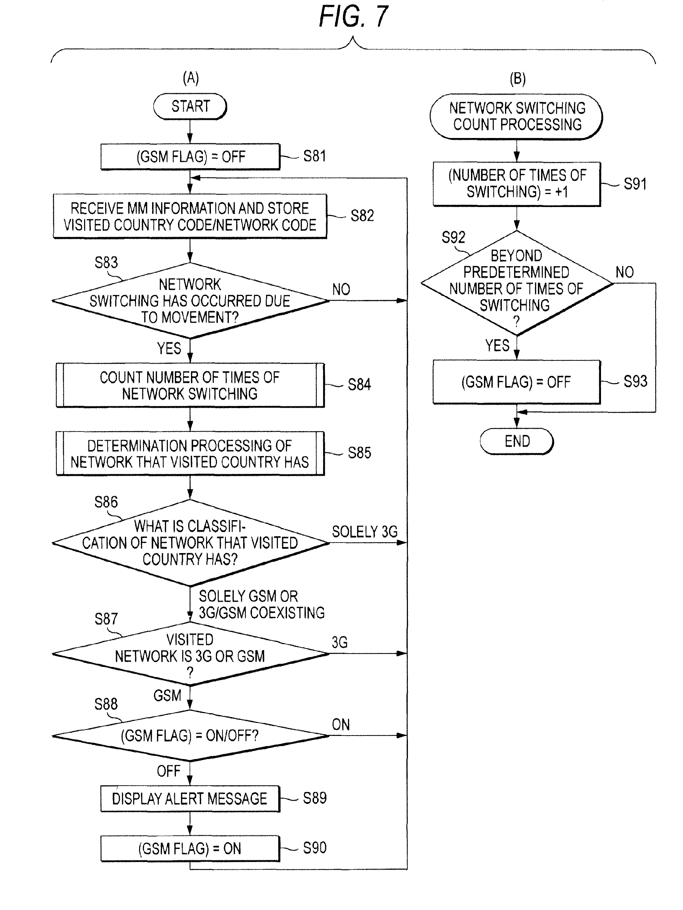

FIG. 7 is a flowchart showing a sequence of a message display operation in a fourth illustrative embodiment, in which FIG. 7(A) shows main processing of the message display operation and FIG. 7(B) shows a sequence of network switching count processing. The fourth illustrative embodiment is a modified embodiment of the first and second illustrative embodiments and determines whether or not to display a message by a predetermined number of times of network switching. In the meantime, FIG. 7 shows an example that is applied to the case where the determination is made depending on the countries, which is described in the first illustrative embodiment. However, the example can be also applied to the case where the determination is made depending on the networks, which is described in the second illustrative embodiment.

In the fourth illustrative embodiment, the alert display is suppressed until the number of times of network switching becomes a predetermined number of times, for example the counted number of times of switching becomes 10 times. The control section 22 first makes the GSM flag OFF (step S81). Then, the control section receives the MM information, which is the visited network identification information, from a base station of a visited network and stores visited country code and network code in the memory 16 (step S82). Then, the control section 22 compares the stored country code and network code with the country code and network code of the visited network identification information stored previously and thus determines whether a network switching has occurred due to movement (step S83). When it is not determined that the network switching has occurred, the control section returns to step S82 and repeats the same processing. On the other hand, when it is determined that the network switching has occurred, the control section performs network switching count processing (step S84).

In the network switching count processing, the control section increments a count, which counts the number of times of the network switching, by +1 (step S91) and thus determines whether the number of times of the network switching exceeds the predetermined number of times of switching (step S92). Here, when it is not determined that the number of times of the network switching exceeds the predetermined number of times of switching, for example 10 times, the control section ends the network switching count processing and returns to the main processing. On the other hand, when it is determined that the number of times of the network switching exceeds the predetermined number of times of switching, the control section makes the GSM flag OFF (step S93) and ends the network switching count processing and returns to the main processing.

After the network switching count processing of step S84, the control section proceeds to determination processing of the network that the visited country has (step S85). In the determination processing of the network that the visited network has, the control section 22 refers to the network type of the network identification information table stored in the memory 16, thereby determining whether the network type is the 3G area, the GSM area or the 3G/GSM coexisting area. First, the control section determines a type of the network that the visited country has (step S86). Here, the control section determines whether a type of the network is solely 3G, solely GSM or 3G/GSM coexisting. When a type of the network that the visited country has is solely 3G, the control section returns to step S82 and repeats the same processing. On the other hand, when a type of the network that the visited network has is solely GSM or 3G/GSM coexisting, the control section subsequently determines whether the visited network is 3G or GSM (step S87). When the visited network is 3G, the control section returns to step S82 and repeats the same processing. On the other hand, when the visited network is GSM, the control section further determines whether the GSM flag is ON or OFF (step S88). When the GSM flag is ON, the control section returns to step S82 and repeats the same processing. On the other hand, when the GSM flag is OFF, the control section displays an alert message on the display 14 (step S89), After displaying the message, the control section makes the GSM flag ON (step S90), returns to step S82 and repeats the same processing.

By the above processing, when the visited network changes to the GSM network, the alert message is displayed. After that, the state of the GSM flag=ON maintains and the alert message is not displayed until the number of times of the network switching becomes the predetermined number of times. When the number of times of the network switching becomes the predetermined number of times, the GSM flag becomes OFF and an alert message is displayed when the visited network changes to the GSM network next time.

Like this, according to the fourth illustrative embodiment, in the GSM area of solely GSM and the 3G/GSM coexisting area, the alert message is displayed when the visited network first changes to the GSM network. After that, the alert display is suppressed until the predetermined number of times of the network switching is performed. Thus, it is possible to suppress the alert display. For example, the alert display is suppressed until the counted number of times of the network switching becomes 10 times. Thereby, it is possible to reduce the number of times of the message display and to perform the notification to the user at appropriate timing and state.

Meanwhile, in another modified embodiment, it is possible to determine whether or not to display the message by a switching frequency of the network, instead of the number of times of the network switching. In this case, the alert display is suppressed until the number of times of the network switching per predetermined unit time becomes a predetermined threshold. By this processing, when the visited network changes to the GSM network, the alert message is displayed once. After that, the alert message is not displayed until the number of times of the network switching per unit time becomes the predetermined threshold. When the switching frequency of the network exceeds a predetermined value, the alert message is displayed when the visited network changes to the GSM network next time. Also in this modified embodiment, it is possible to suppress the alert display by the switching frequency of the network and to perform the notification to the user at appropriate timing and state.

In the above illustrative embodiments, the display section that displays a message is provided as the notification section that performs the notification to the user for alert. However, the invention is not limited thereto. For example, a sound notification section using a speaker and the like, a light notification section using an LED and the like and a vibration notification section using a vibrator and the like or a combination thereof may be provided.

In the meantime, one skilled in the art can make a variety of modifications and changes based on the specification and the well-known technology without departing from the gist and scope of the invention, which are also included in the invention to be protected. Also, the respective constitutional elements in the illustrative embodiments can be arbitrarily combined without departing from the gist of the invention.

This application is based on Japanese Patent Application (Patent Application No. 2009-237181) filed on October 14, 2009, the disclosures of which are incorporated herein by reference.

### INDUSTRIAL APPLICABILITY

According to the invention, it is possible to notify the user of the switching of the communication method at appropriate timing and state and to effectively alert the user. Also, the invention is useful for a portable terminal such as portable phone apparatus, portable communication terminal and the like having a wireless communication function corresponding to a mobile communication system.

### DESCRIPTIONS OF REFERENCE NUMERALS

- 10:: communication apparatus
- 11:: antenna
- 12:: RF section
- 13:: processing section
- 14:: display
- 15:: operation section
- 16:: memory
- 21:: communication processing section
- 22:: control section
- 23:: message generation section

## Claims

1. A portable terminal comprising:
a wireless communication section that performs wireless communication adapted for a mobile communication system;
a notification section that performs notification to a user; and
a notification control section that enables the notification section to perform notification when a communication method of the wireless communication is switched from a first communication method to a second communication method,
wherein the notification control section performs the notification once when the communication method is switched from the first communication method to the second communication method while the portable terminal is moved, and then suppresses the notification until a predetermined condition is satisfied.

2. The portable terminal according to claim 1, wherein the notification control section determines a change in a country or a region in which the portable terminal is located, based on visited network identification information acquired from the mobile communication system and performs the notification once, and then suppresses the notification until the country or the region in which the portable terminal is located is changed.

3. The portable terminal according to claim 1, wherein the notification control section determines a change in a network of the mobile communication system in which the portable terminal is located, based on visited network identification information acquired from the mobile communication system and performs the notification once, and then suppresses the notification until the network in which the portable terminal is located is changed.

4. The portable terminal according to claim 1, wherein the notification control section determines predetermined time lapse and performs the notification once, and then suppresses the notification until predetermined time elapses.

5. The portable terminal according to claim 1, wherein the notification control section determines the number of times of network switching of the mobile communication system in which the portable terminal is located, based on visited network identification information acquired from the mobile communication system and performs the notification once, and then suppresses the notification until the number of times of network switching becomes a predetermined number of times.

6. The portable terminal according to claim 1, wherein the notification section includes a display section that displays a message of notifying the user of switching of the communication method.
